# EUROPEAN PATENT APPLICATION

(11) **EP 4 443 292 A1**
(43) Date of publication of application: **09.10.2024**
(21) Application number: 23167031.6
(22) Date of filing: 06.04.2023
(51) Int. Cl.: G06F 9/445, G06F 9/455, B66B 1/34

(54) **A SOLUTION FOR PREPARING A BUILDING SYSTEM RELATED APPLICATION PROGRAM-MING INTERFACE (API) FOR OPERATION**

(71) Applicant: KONE Corporation, 00330 Helsinki (FI)
(72) Inventor: PIRTTIMAA, Viljami, 00330 HELSINKI (FI); BELOV, Mika, 00330 HELSINKI (FI)
(74) Representative: Berggren Oy

(57) **Abstract**

The invention relates to a method for preparing a building system related application programming interface (API) (110) for operation. The method comprises: detecting (310), by a mobile user device (120), a geographical triggering event representing an entry of the mobile user device (120) into a predefined area (410); and generating (320), by the mobile user device (120), to the building system related API (110), in response to detecting the geographical triggering event, a preparation request to run serverless functions in the building system related API (110) . The invention relates also to a system (100), a computer program (625), and a computer-readable medium for preparing a building system related API (110) for operation.

## Description

### TECHNICAL FIELD

The invention concerns in general the technical field of building systems. Especially the invention concerns building system related application programming interfaces.

### BACKGROUND

Application programming interfaces (APIs), e.g. a cloud-based APIs, may be used in different building systems, such as elevator systems. For example, an elevator call API may be used for making elevator calls for example from mobile devices via mobile applications. The APIs, e.g. the elevator call API, may be implemented by using serverless functions, e.g. lambda functions. Typically, the serverless functions are launched on-demand and turned completely off within a couple of minutes of inactivity. When a user makes an elevator call by using the elevator call API, the serverless functions are launched to warm up the API before the elevator call can be served. If nobody globally has made elevator calls using the elevator call API in a couple of minutes, the serverless functions are not running. When the next user makes an elevator call by using the elevator call API, it takes around 10 seconds longer than normally (i.e. when the serverless functions are already running) to serve the elevator call as the serverless functions are cold starting. Once the serverless functions are already running, the elevator calls are expected to be served within 2 to 3 seconds, which means a significant difference to the situation, where the serverless functions are cold starting. This enables cost savings, but adversely it affects the performance of the elevator call process.

The cold starting problem could be solved by keeping the serverless functions warm with periodic artificial requests generated to the API. Another option would be to redesign the API without serverless functions so that the API is always running. However, both of these solutions increase the costs of using the API, because typically the use of the API is charged based on the execution duration of the requests by the API, i.e. there is no charge when the serverless functions are not running.

Therefore, there is a need to develop further solutions for elevator related APIs.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method, a system, a computer program, and a computer-readable medium for preparing a building system related application programming interface (API) for operation. Another objective of the invention is that the method, the system, the computer program, and the computer-readable medium for preparing a building system related application programming interface (API) for operation enable a reduced serving time of at least one control request generated to the building system related API.

The objectives of the invention are reached by a method, a system, a computer program, and a computer-readable medium as defined by the respective independent claims.

According to a first aspect, a method for preparing a building system related application programming interface (API) for operation is provided, wherein the method comprises: detecting, by a mobile user device, a geographical triggering event representing an entry of the mobile user device into a predefined area; and generating, by the mobile user device, to the building system related API, in response to detecting the geographical triggering event, a preparation request to run serverless functions in the building system related API.

The method may further comprise generating, by the mobile user device or at least one second mobile user device, at least one control request to the building system related API to be provided to a control system.

The building system related API may be an elevator call API used for making elevator calls.

The method may further comprise generating, by the mobile user device or at least one second mobile user device, during an elevator call request to the elevator call API to be provided to an elevator control system for generating an elevator call.

Alternatively, the building system related API may be a lighting system related API, a heating, ventilation, and air conditioning (HVAC) system API, a building management system (BMS) API, or an infotainment system API.

The detected geographical triggering event may be a geofencing -based triggering event, a Bluetooth beacon -based triggering event, wireless access point -based triggering event, an access control -based triggering event, or a usage pattern -based triggering event.

The preparation request may comprise a request to run the serverless functions in the building system related API during a predefined time.

According to a second aspect, a system for preparing a building system related application programming interface (API) for operation is provided, wherein the system comprises: a mobile user device, a control system, and the building system related API between the mobile user device and the control system, wherein the mobile user device is configured to: detect a geographical triggering event representing an entry of the mobile user device into a predefined elevator related area, and generate to the building system related API in response to detecting the geographical triggering event a preparation request to run serverless functions in the building system related API.

The mobile user device may further be configured to generate during at least one control request to the building system related API to be provided to the control system.

Alternatively or in addition, the system may further comprise at least one second mobile user device, the at least one second mobile user device may be configured to generate during at least one control request to the building system related API to be provided to the control system.

The building system related API may be an elevator call API used for making elevator calls.

The mobile user device may further be configured to generate during an elevator call request to the elevator call API to be provided to an elevator control system for generating an elevator call.

Alternatively or in addition, the system may further comprise at least one second mobile user device, the at least one second mobile user device may be configured to generate during an elevator call request to the elevator call API to be provided to an elevator control system for generating an elevator call.

Alternatively, the building system related API may be a lighting system related API, a heating, ventilation, and air conditioning (HVAC) system API, a building management system (BMS) API, or an infotainment system API.

The detected geographical triggering event may be a geofencing -based triggering event, a Bluetooth beacon -based triggering event, wireless access point -based triggering event, an access control -based triggering event, or a usage pattern -based triggering event.

The preparation request may comprise a request to run the serverless functions in the building system related API during a predefined time.

According to a third aspect, a computer program is provided, wherein the computer program comprises instructions which, when the program is executed by a computer, cause the computer to carry out the method as described above.

According to a fourth aspect, a computer-readable medium is provided, wherein the computer-readable medium comprises instructions which, when executed by a computer, cause the computer to carry out the method as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of a system for preparing a building system related application programming interface (API) for operation.
Figure 2 illustrates schematically an example of a building environment, in which the system may be implemented.
Figure 3 illustrates schematically an example of a method for preparing the building system related API for operation.
Figure 4 illustrates schematically an example situation, where a mobile user device has entered a predefined area.
Figure 5 illustrates schematically another example situation, where a mobile user device has entered a predefined area.
Figure 6 illustrates schematically an example of components of a mobile user device.

### DESCRIPTION OF THE EXEMPLIFYING EMBODIMENTS

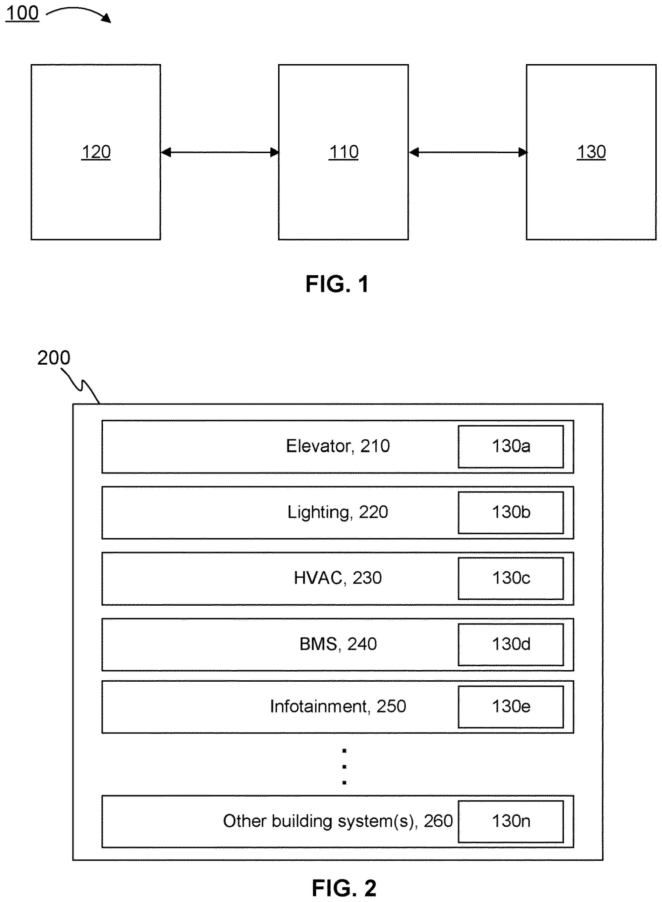

Figure 1 illustrates schematically an example of a system 100 for preparing a building system related application programming interface (API) 110 for operation. The system comprises a mobile user device 120, a control system 130, and the building system related API 110 between the mobile user device 120 and the control system 130. The system 100 may further comprise other mobile user devices 520a-520n as will be described later in this application. The mobile user device 120, 520a-520n may be a mobile device, e.g. a mobile phone or a tablet computer. The mobile user device 120, 520a-520n may be carried by a user.

Figure 2 illustrates schematically an example of a building environment 200, in which the system 100 may be implemented. The building 200 may comprise at least one of building system 210-260. The at least one building system 210-260 may for example comprise an elevator system 210; a lighting system 220; a heating, ventilation, and air conditioning (HVAC) system 230; a building management system (BMS) 240; an infotainment system 250; and/or one or more other building systems 260. Each building system 210-260 comprises a respective control system 130. The elevator system 210 comprises an elevator control system 130a configured to control the operation of the elevator system 210. The elevator system 210 further comprises at least one elevator car configured to travel along a respective elevator shaft between a plurality of floors. The elevator system may further comprise one or more known elevator related entities, e.g. a hoisting system, user interface devices, elevator doors, safety circuit and devices, and/or elevator brakes, etc. The lighting system 220 comprises a lighting control system 130b configured to control the operation of the lighting system 220. The HVAC system 230 comprises a HVAC control system 130c configured to control the operation of the HVAC system 230. The BMS 240 comprises a BMS control system 130d configured to control the operation of the BMS 240. The infotainment system 250 comprises an infotainment control system 130e configured to control the operation of the infotainment system 250. The one or more other building systems 260 comprises each a respective control system 130n configured to control said building system 260.

The building system related API 110 operates as an interface, i.e. software intermediary, between the mobile user device 120 and the control system 130, to enable the mobile user device 120 and the control system 130 to communicate with each other. The communication between the mobile user device 120 and the control system 130 may for example comprise one or more control requests generated by the mobile user device 120 for controlling one or more operations of the control system 130. For example, the building system related API 110 enables that the one or more operations of the control system 130 may be controlled by the one or more control requests generated by the mobile user device 120. The mobile user device 120 and the control system 130 are communicatively coupled to the building system related API 110, e.g. via a wireless communication network. The building system related API 110 may for example be a cloud API, an edge API, or a local API. The cloud API is located in a cloud server. The mobile user device 120 and the control system 130 may be communicatively coupled to the cloud API of the cloud server via Internet. The local API is located in a local server at the site, i.e. at the building 200, e.g. at a location of a building system 210-260 using the building system related API 110. The mobile user device 120 and the control system 130 may be communicatively coupled to the local API of the local server via a local area network (LAN), e.g. Wi-Fi or Ethernet; or a personal area network (PAN), e.g. Infrared data association (IrDA), Bluetooth, Zigbee, or any other short-range wireless network technology. The edge API locates partially in a cloud server and partially in a local server at the site, i.e. at the building 200, e.g. at a location of a building system 210-260 using the building system related API. For example, the edge API may locate at an edge device between the cloud server and the local server. The edge device may locate at the site and be communicatively coupled to the could server via Internet and to the local server via LAN or PAN. The mobile user device 120 and the control system 130 are communicatively coupled to the edge API of the edge device via Internet and/or via the LAN or the PAN. The building system related API 110 is implemented by using serverless functions. The serverless functions may for example be Amazon Web Services (AWS) lambda functions, Google cloud functions, Azure functions, IBM cloud functions, Oracle functions, or any other known serverless functions. In a serverless computing, a service provider (e.g. AWS, Google Cloud, Azure, or IBM, etc.) is responsible for executing a piece of code in the form of a function, i.e. the serverless function. The implementation of the building system related API 110 by using the serverless functions may be based on any known serverless computing -based implementation.

The building system related API 110 may be an elevator related API. When the building system related API 110 is the elevator related API, the control system 130 of the system 100 is the elevator control system 130a. The elevator related API operates as an interface between the mobile user device 120 and the elevator control system 130a to enable the mobile user device 120 and the elevator control system 130a to communicate with each other. According to an example, the elevator related API 110 may be an elevator call API used for making elevator calls. The elevator call API may be used for making elevator calls from the mobile user device 120 to the elevator control system 130a. Alternatively, the building system related API 110 may be a lighting system related API. When the building system related API 110 is the lighting system related API, the control system 130 is the lighting control system 130b. The lighting system related API operates as an interface between the mobile user device 120 and the lighting control system 130b to enable the mobile user device 120 and the lighting control system 130b to communicate with each other. Alternatively, the building system related API 110 may be a HVAC system related API. When the building system related API 110 is the HVAC system related API, the control system 130 is the HVAC control system 130c. The HVAC system related API operates as an interface between the mobile user device 120 and the HVAC control system 130c to enable the mobile user device 120 and the HVAC control system 130c to communicate with each other. Alternatively, the building system related API 110 may be a BMS related API. When the building system related API 110 is the BMS related API, the control system 130 is the BMS control system 130d. The BMS related API operates as an interface between the mobile user device 120 and the BMS control system 130d to enable the mobile user device 120 and the BMS control system 130d to communicate with each other. Alternatively, the building system related API 110 may be an infotainment system related API. When the building system related API 110 is the infotainment system related API, the control system 130e is the infotainment control system 130a. The infotainment system related API operates as an interface between the mobile user device 120 and the infotainment control system 130e to enable the mobile user device 120 and the infotainment control system 130e to communicate with each other. Alternatively, the building system related API 110 may be any other building system related API operating as an interface between the mobile user device 120 and the control system 130n of the respective other building system 260 to enable the mobile user device 120 and said control system 130n to communicate with each other.

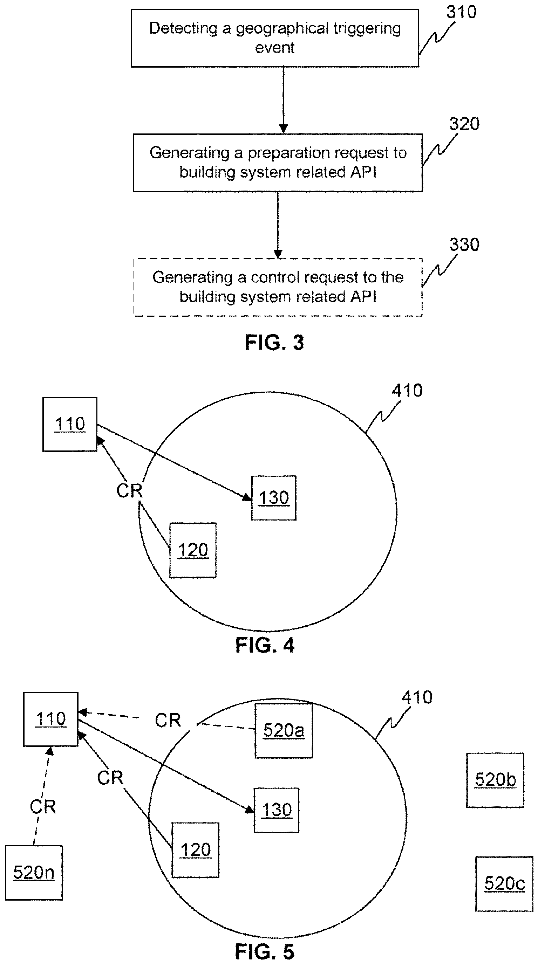

Next an example of a method for preparing the building system related API 110 for operation is described by referring to Figure 3. Figure 3 schematically illustrates the method as a flow chart.

At a step 310, the mobile user device 120 detects a geographical triggering event representing an entry of the mobile user device 120 into a predefined area 410. The predefined area 410 may for example comprise at least partly the building 200 comprising the building system 210-260 respective to the building system related API 110. For example, the predefined area 410 may comprise the whole building 200 or a part of the building 200. For example, if the predefined area 410 comprises the whole building 200, the geographical triggering event represents an entry of the mobile user device 120 into the building 200. According to another example, if the predefined area 410 comprises a part of the building 200, e.g. an elevator lobby area or any other part of the building 200, the geographical triggering event represents an entry of the mobile user device 120 into said part of the building, e.g. into the elevator lobby area. Figure 4 illustrates schematically an example situation, wherein the mobile user device 120 has entered the predefined area 410. In other words, in the example situation of Figure 4, the mobile user device 120 has detected the geographical triggering event representing the entry of the mobile user device 120 into the predefined area 410.

The detected geographical triggering event may for example be a geofencing - based triggering event, a Bluetooth beacon -based triggering event, a wireless access point -based triggering event, an access control -based triggering event, or a usage pattern -based triggering event. In case of the geofencing - based triggering event, the mobile user device 120 detects that it, i.e. the mobile user device 120, enters a geofence, i.e. a virtual boundary, around the predefined area 410, e.g. around the building 200. The geofencing may for example be based on Global Positioning System (GPS) positioning, radio identification (RFID) positioning, wireless local area network (e.g. Wi-Fi) positioning, or cellular data positioning. Any known monitoring solutions of the geofence may be used by the mobile user device 120, e.g. a mobile operating system (e.g. iOS or Android) of the mobile user device 120, for monitoring the geofence. In case of the Bluetooth beacon -based triggering event, a Bluetooth beacon device is arranged at an edge of the predefined area 410, e.g. close to a door allowing entrance into the building 200. The Bluetooth beacon device broadcasts an identifier (ID) specific for said Bluetooth beacon device. The mobile user device 120, e.g. the mobile operating system of the mobile user device 120, may detect that it enters the predefined area 410 in response to receiving the ID specific for said Bluetooth beacon device. In case of the wireless access point -based triggering event the mobile user device 120 may detect that it enters the predefined area 410 based on a signal received from one or more wireless access points locating within the predefined area 410, e.g. inside the building 200. In case of the access control -based triggering event, the mobile user device 120 detects that it enters the predefined area 410 based on access control data received e.g. from an access control system controlling access of users into the predefined area 410. The access control may for example be based on using key cards; tags; identification codes; such as personal identity number (PIN) code, ID number; and/or biometric technologies, such as fingerprint, facial recognition, iris recognition, retinal scan, voice recognition, etc. For example, when the user carrying the mobile user device 120 interacts with the access control system, e.g. shows an access key card to a reader device of the access control system, the mobile user device 120 may receive from the access control system access control data indicating that said user accesses into the predefined area 410. In case of the usage pattern - based triggering event, the mobile user device 120 detects that it is likely to enter the predefined area 410 based on learned usage patterns of the predefined area 410, e.g. the building 200. The usage patterns of the predefined area 410 may for example be learned by using one or more machine learning techniques or a statistical analysis. The learning may for example be based on access control data and/or sensor data from the predefined area 410.

At a step 320, in response to detecting the geographical triggering event the mobile user device 120 generates to the building system related API 110 a preparation request to run the serverless functions in the building system related API 110.The preparation request may for example comprise a request to run the serverless functions in the building system related API 110 during a predefined time. In response to receiving the preparation request the building system related API 110 is prepared for the operation. The preparation request invokes the serverless functions in the building system related API 110 to run, e.g. during the predefined time. The operation of the building system related API 110 may for example comprise executing, e.g. by running a computer code, one or more requests received by the building system related API 110. The predefined time may be defined based on the purpose of use of the building system related API 110. The predefined time may for example be from some seconds to tens of minutes, for example, but not limited to, from 1 second to 10 minutes. For example, in the example situation of Figure 4, in response to detecting the geographical triggering event the mobile user device 120 generates to the building system related API 110 the preparation request to run the serverless functions in the building system related API 110, e.g. for the predefined time. The generation of the preparation request enables that the serverless functions are already running, i.e. warmed up, if the building system related API 110 receives at least one control request, e.g. during the predefined time. When the serverless functions are already running, when the building system related API 110 receives the at least one control request, the execution time of the at least one control request by the building system related API 110 is reduced in comparison to a situation, where the serverless functions are not running, when the building system related API 110 receives the at least one control request. The reduced execution time of the at least one control request in turn enables that at least one control action according to the at least one control request may be served with a reduced serving time in comparison to a situation, where the serverless functions are not running, when the building system related API 110 receives the at least one control request. In other words, the generation of the preparation request to warm-up the serverless functions significantly reduces the execution time of the at least one control request and the serving time of the at least one control action according to the at least one control request. Furthermore, warming-up the serverless functions by the generated preparation request only in response to the detection of the geographical triggering event, reduces the costs caused by the use of the building system related API 110. According to an example, where the building system related API 110 is an elevator call API used for making elevator calls from the mobile user device 120 to the elevator control system 130a, in response to detecting the geographical triggering event the mobile user device 120 generates to the elevator call API the preparation request to run the serverless functions in the elevator call API, e.g. for the predefined time. According to an example, there may be one or more restrictions for the mobile user device 120 that is allowed to generate the preparation request to the building system related API 110 in response to detecting the geographical triggering event. For example, only the mobile user device 120 of an identified user is allowed to generate the at least one control request to the building system related API 110 in response to detecting the geographical triggering event.

At a step 330, the mobile user device 120 may generate, e.g. during the predefined time, at least one control request to the building system related API 110 to be communicated, i.e. provided, to the control system 130. Alternatively or in addition, at the step 330, at least one other mobile user device, e.g. a second mobile user device, 520a-520n may generate, e.g. during the predefined time, at least one control request to the building system related API 110 to be communicated to the control system 130. Alternatively, there may exists situation(s), where no control requests are generated to the building system related API 110 during the predefined time. After expiration of the predefined time, the running of the serverless functions in the building system related API 110 may be ended, i.e. the serverless functions may be tuned off, irrespective of whether any control requests have been generated to the building system related API 110 or not. The at least one control request may be generated by the mobile user device 120 or the at least one other mobile user device 520a-520n in response to receiving user input from the user of the mobile user device 120 through a user interface unit of the mobile user device 120 or the at least one other mobile user device 520a-520n, respectively. Figures 5 illustrates schematically another example situation, wherein the mobile user device 120 has entered the predefined area 410. In the example situation of Figure 5, the system 100 comprises further other mobile user devices 520a-520n. Similarly, as in the example situation of Figure 4, in the example situation of Figure 5, in response to detecting the geographical triggering event the mobile user device 120 generates to the building system related API 110 the preparation request to run the serverless functions the building system related API 110, e.g. for the predefined time. The mobile user device 120 may generate, e.g. during the predefined time, at least one control request (CR) to the building system related API 110 to be communicated to the control system 130. Alternatively, at least one other mobile user device 520a-520n may generate, e.g. during the predefined time, at least one control request (CR) to the building system related API 110 to be communicated to the control system 130. Preferably, any mobile user device of the at least one other mobile user device 520a-520n irrespective of the location of the mobile user device may generate the at least one control request (CR) to the building system related API 110. In the example situation of Figure 5, the other mobile user devices 520a and 520n generate the at least one control request (CR) to the building system related API 110. Alternatively, it may be restricted that only mobile user devices 120, 520a locating within the predefined area 110 are allowed to generate the at least one control request (CR) to the building system related API 110. For example, in the example situation of Figure 5, the other mobile user device 520a that locates within the predefined area 410 is allowed to generate the at least one control request (CR) to the building system related API 110 in the restricted case. Alternatively or in addition, there may be one or more further restrictions for the mobile user devices 120, 520a-520n that are allowed to generate the at least one control request to the building system related API 110, e.g. only mobile user devices 120, 520a-520n of identified users are allowed to generate the at least one control request to the building system related API 110.

According to an example, where the building system related API 110 is an elevator call API used for making elevator calls from the mobile user device 120, the mobile user device 120 may generate, e.g. during the predefined, time an elevator call request to the elevator call API 110 to be communicated to the elevator control system 130a for generating the elevator call according to the elevator call request. Alternatively or in addition, at least one other mobile user device 520a-520n may generate, e.g. during the predefined time, an elevator call request to the elevator call API 110 to be communicated to the elevator control system 130a for generating the elevator call according to the elevator call request. The elevator call request may be generated by the mobile user device 120 or the at least one other mobile user device 520a-520n in response to receiving a user input from the user of the mobile user device 120 through a user interface unit of the mobile user device 120 or the at least one other mobile user device 520a-520n, respectively. When the serverless functions are already running, when the elevator call API 110 receives the elevator call request from the mobile user device 120, the elevator call may for example be expected to be served within 2 to 3 seconds from the generation of the elevator call request. In comparison, if the functions are not running, when the elevator call API 110 receives the elevator call request from the mobile user device 120, the elevator call may for example be expected to be served within 12 to 13 seconds from the generation of the elevator call request, which means that it takes about 10 second longer to serve the elevator call than in the case, where the serverless functions are already running.

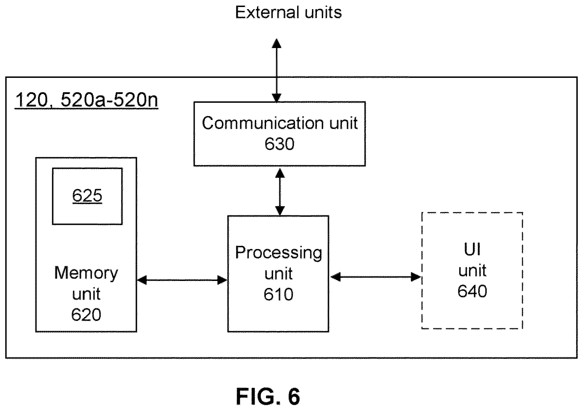

Figure 6 illustrates schematically an example of the components of the mobile user device 120, 520a-520n. The mobile user device 120, 520a-520n may comprise a processing unit 610 comprising one or more processors (e.g. microprocessors), a memory unit 620 comprising one or more memories, a communication unit 630 comprising one or more communication devices, and possibly a user interface (UI) unit 640. In addition to the mentioned entities the mobile user device 120, 520a-520n may comprise further devices and entities, such as a battery for storing energy to be used by the other entities. The entities belonging to the mobile user device 120, 520a-520n may be communicatively coupled to each other with e.g. a communication bus. The memory unit 620 may store portions of computer program code 625 and any other data. The computer program 625 may comprise instructions which, when the computer program 625 is executed by the processing unit 610 of the mobile user device 120, 520a-520n may cause the processing unit 610, and thus the mobile user device 120, 520a-520n to carry out desired tasks, e.g. one or more of the method steps described above. The processing unit 610 may thus be arranged to access the memory unit 620 and retrieve and store any information therefrom and thereto. For sake of clarity, the processor herein refers to any unit suitable for processing information and control the operation of the mobile user device 120, 520a-520n, among other tasks. Similarly, the memory unit 620 is not limited to a certain type of memory only, but any memory type suitable for storing the described pieces of information may be applied in the context of the present invention. The communication unit 630 provides one or more communication interfaces for communication with any other unit, e.g. the building system related API 110 and/or any external system. The communication unit 630 may comprise one or more communication devices, e.g. radio transceiver, antenna, etc. The communication may be performed e.g. in a wireless manner. The user interface 640 may comprise one or more input/output (I/O) devices, such as buttons, keyboard, touch screen, microphone, loudspeaker, display and so on, for receiving input and outputting information. The user of the mobile user device 120 may for example provide input through the user interface unit 640 with the mobile user device 120, 520a-520n and the mobile user device 120, 520a-520n may, under control of the processing unit 610, output information to the user. The computer program 625 may be a computer program product that may be comprised in a tangible nonvolatile (non-transitory) computer-readable medium bearing the computer program code 625 embodied therein for use with a computer, i.e. the mobile user device 120, 520a-520n. The computer program code 625 may for example comprise one or more mobile applications, such as computer program codes for executing desired tasks, e.g. one or more of the method steps described above.

The specific examples provided in the description given above should not be construed as limiting the applicability and/or the interpretation of the appended claims. Lists and groups of examples provided in the description given above are not exhaustive unless otherwise explicitly stated.

## Claims

1. A method for preparing a building system related application programming interface (API) (110) for operation, the method comprises:
detecting (310), by a mobile user device (120), a geographical triggering event representing an entry of the mobile user device (120) into a predefined area (410); and
generating (320), by the mobile user device (120), to the building system related API (110), in response to detecting the geographical triggering event, a preparation request to run serverless functions in the building system related API (110).

2. The method according to claim 1, further comprising generating (330), by the mobile user device (120) or at least one second mobile user device (520a-520n), at least one control request to the building system related API (110) to be provided to a control system (130, 130a-130n).

3. The method according to any of the preceding claims, wherein the building system related API (110) is an elevator call API used for making elevator calls.

4. The method according to claim 3, further comprising generating (330), by the mobile user device (120) or at least one second mobile user device (520a-520n), an elevator call request to the elevator call API (110) to be provided to an elevator control system (130a) for generating an elevator call.

5. The method according to any of claims 1 or 2, wherein the building system related API (110) is a lighting system related API, a heating, ventilation, and air conditioning (HVAC) system API, a building management system (BMS) API, or an infotainment system API.

6. The method according to any of the preceding claims, wherein the detected geographical triggering event is a geofencing -based triggering event, a Bluetooth beacon -based triggering event, wireless access point -based triggering event, an access control -based triggering event, or a usage pattern - based triggering event.

7. The method according to any of the preceding claims, wherein the preparation request comprises a request to run the serverless functions in the building system related API (110) during a predefined time.

8. A system (100) for preparing a building system related application programming interface (API) (110) for operation, the system comprising:
a mobile user device (120),
a control system (130, 130a-130n), and
the building system related API (110) between the mobile user device (120) and the control system (130, 130a-130n),
wherein the mobile user device (120) is configured to perform the method according to any of the preceding claims.

9. The system (100) according to claim 8, further comprising at least one second mobile user device (520a-520n).

10. The system (100) according to claim 9, wherein the at least one second mobile user device (520a-520n) is configured to generate at least one control request to the building system related API (110) to be provided to the control system (130, 130a-130n).

11. The system (100) according to any of claims 9 or 10, wherein the building system related API (110) is an elevator call API used for making elevator calls, wherein the at least one second mobile user device (520a-520n) is configured to generate an elevator call request to the elevator call API (110) to be provided to an elevator control system (130a) for generating an elevator call.

12. A computer program (625) comprising instructions which, when the program is executed by a computer, cause the computer to carry out the method according to any of claims 1 to 7.

13. A computer-readable medium comprising instructions which, when executed by a computer, cause the computer to carry out the method according to any of claims 1 to 7.
